Europäisches Patentamt

European Patent Office

Office européen des brevets

(19)

(11) EP 0 601 761 B1

(12) EUROPEAN PATENT SPECIFICATION

(45) Date of publication and mention
of the grant of the patent:
05.11.1997 Bulletin 1997/45

(51) Int Cl.⁶: C09C 1/00, C09C 1/36

(21) Application number: 93309524.2

(22) Date of filing: 30.11.1993

(54) **Manufacturing method of pigment including lower titanium oxide**

Verfahren zur Herstellung eines Pigments, welches ein niederes Titanoxid enthält

Procédé de fabrication d'un pigment comprenant un oxyde inférieur de titane

(84) Designated Contracting States:
AT BE CH DE DK ES FR GB GR IE IT LI LU MC NL
PT SE

(30) Priority: 30.11.1992 JP 343212/92
18.01.1993 JP 23277/93
15.03.1993 JP 80178/93

(43) Date of publication of application:
15.06.1994 Bulletin 1994/24

(73) Proprietor: SHISEIDO COMPANY LIMITED
Chuo-ku Tokyo 104 (JP)

(72) Inventors:
• Shio, Shoichiro, c/o Shiseido Research Center
Yokohama-shi, Kanagawa 223 (JP)
• Suzuki, Fukuji, c/o Shiseido Research Center
Yokohama-shi, Kanagawa 223 (JP)

(74) Representative: Perry, Robert Edward
GILL JENNINGS & EVERY
Broadgate House
7 Eldon Street
London EC2M 7LH (GB)

(56) References cited:
EP-A- 0 478 152          DE-A- 3 433 657

• DATABASE WPI Week 9251, Derwent
Publications Ltd., London, GB; AN 92-420820 &
JP-A-4 317 413 (TOHO TITANIUM) 9 November
1992
• DATABASE WPI Week 9307, Derwent
Publications Ltd., London, GB; AN 93-055093 &
JP-A-5 004 818 (TOHO TITANIUM) 14 January
1993
• DATABASE WPI Week 9120, Derwent
Publications Ltd., London, GB; AN 91-144003 &
JP-A-3 079 673 (SHISEIDO) 4 April 1991
• PATENT ABSTRACTS OF JAPAN vol. 16, no. 575
(C-1011)15 December 1992 & JP-A-04 228 426
(ISHIHARA SANGYO KAISHA) 18 August 1992

**Description**

[FIELD OF THE INVENTION]

The present invention relates to a manufacturing method for a pigment including reduced titanium oxide.

[BACKGROUND ART]

Titanium pigments, especially titanium mica pigment, have been used in various field. The titanium mica pigment generally provides a titanium dioxide layer on a surface of lamella shape mica and the pigment has iridescence and various interference color, as mentioned in the COSMETIC MATERIAL STANDARD. As a manufacturing method of the pigment, an aqueous solution of inorganic salt of titanium (for example, titanyl sulfate) is hydrolyzed under the existence of mica and the hydrated titanium dioxide is deposited on the surface of mica. The obtained hydrated titanium dioxide coated mica is further hydrolyzed as described in JAPANESE PATENT PUBLISHED No.43-25644. In this case, the obtained titanium mica pigment has various interference colors according to the thickness of the titanium dioxide layer on the surface of mica particle.

However, although the above titanium mica pigment has various interference colors, the appearance color of the pigment is almost white.

In order to give a various appearance color to the titanium mica pigment, various method have been studied. As a general way, other color pigments such as iron oxide, ultramarine, chrome oxide, carbon black, carmine and so on were added to the titanium mica pigment.

However, safety, stability, light stability, acid stability, alkaline stability, solvent stability, heat stability and so on are depend on the added color pigments. For example, a blue titanium mica pigment including the ultramarine fades in alkaline solvent and red titanium mica pigment including the carmine is faded by irradiation of light. Furthermore, there are some pigments which have safety problems such as carcinogenicity of 3,4-benzpyrene which may be contaminated in the carbon black, or oral toxicity of hexavalent chrome which may be mixed in the chrome oxide. Moreover, because the color pigments were added in the titanium mica pigment, there is a possibility to cause a color shade in solvents.

Therefore, the present inventors proposed a colored titanium mica pigment whose interference color could be observed as appearance color. This pigment was produced by reducing the titanium dioxide layer of titanium dioxide coated mica in order to adjust each strength of reflection light from the surface of titanium oxide layer and the reflection light from the surface of mica, as described the JAPANESE PATENT PUBLISHED No.4-61032 and 4-61033.

With regard to the colored titanium mica pigment, it became possible to produce the pigment which had various appearance colors from white mica, white titanium dioxide and dark reduced titanium oxide only. Moreover, the pigment had vivid color tone more than the titanium mica pigment including the other color pigment, and safety, stability, light stability, acid stability, alkaline stability, solvent stability and heat stability thereof were excellent, compared to the prior colored titanium mica pigment including other pigment.

In order to produce the reduced titanium oxide in the colored titanium mica pigment, it is necessary to reduce at least a part of the titanium dioxide on the surface of titanium mica using reducing gas such as hydrogen gas and ammonia gas, or using metallic titanium.

However, when manufacturing the pigment using a reducing gas, a large reactor must be used because of the inefficiency of the reduction, and a large amount of reducing gas is necessary to obtain sufficient reduction.

Also, in case of using metallic titanium, cohesion by fusing titanium and titanium, or titanium and mica sometimes occurs.

[SUMMARY OF THE INVENTION]

Accordingly, it is an object of the present invention to eliminate the above-described problems in the prior art and to provide an efficient manufacturing method of uniform pigment including lower titanium oxide.

According to a first aspect of the present invention, a method for preparing a pigment comprises heating a mica pigment coated with titanium dioxide with a reducing agent selected from silicon, titanium hydride, calcium hydride and carbon, in a low oxygen atmosphere.

Other aspects of the invention are the subject of claims 2 to 15.

The composition of the present invention will be explained in detail herein after.

The reducing agent for use in the present invention is selected from silicon, titanium hydride, calcium hydride and carbon. Particle size and purity of the reducing agent are not especially limited, but reducing agents having small particle and high purity are more efficient.

The quantitative relation between the reducing agent and the titanium dioxide is preferably 0.1 to 30 weight part ("part") reducing agent to 100 part mica titanium, and more preferably 0.5 to 20 part, respectively. If the amount of reducing agent is less than 0.1 part the reduction may not progress. If the amount of reducing agent is more than 30 part, the reduction efficiency may not be improved any more.

In the present invention, cohesion by fusing the reducing agent and the pigment is hardly observed and uniform and vivid color tone can be observed.

As the pigment, commercially available titanium dioxide coated mica, or titanium dioxide coated mica of which the surface is coated with alumina, silica and so on can be used. Although the particle diameter is not especially limited, the particle diameter of commercially available titanium dioxide-coated mica is about 1 to 500 $\mu$m. The titanium dioxide-coated mica having small diameter and flat shape is preferable because beautiful color and iridescence can be obtained in case of manufacturing the colored mica titanium.

Generally, as the mica which can be used in the invention, muscovite mica is preferred, but biotite and so on can also be used.

An assistant reducing agent can be used, examples of which include,

ammonium compounds such as urea, ammonium chloride, ammonium bicarbonate and ammonium carbonate,
ammonia adsorbents such as porous ingredients like activated carbon, silica gel and clay mineral,
NH-compounds such as amine compounds, imine compounds, amide compounds, imide compounds and hydroxyl amine compounds are cited.

For examples of amines, oxamide, 2-aminoethanol, 4,4'-diaminoazobenzene, p-phenylenediamine, pyridine, aminoguanidine and p-nitroaniline are cited.

For examples of imines, 1-propane imine ($CH_3CH_2CH=NH$) and N-benzylidenmethanamine ($C_6H_5-CH=N-CH_3$) are cited.

For examples of imides, 1,2-cyclohexandicarboxyimide and succininide are cited.

Other assistant reducing agents that can be used are inorganic or organic in nature, and mixtures thereof.

The quantitative relation between the assistant reducing agent and the reducing agent is preferably more than or equal to 0.5 part of the assistant reducing agent to 10 part of the reducing agent, and more preferably more than or equal to 1 part of the assistant reducing agent is used. If the amount of assistant reducing agent used is less than 0.5 part, the reduction may not be improved and the function of the assistant reducing agent is hardly noticed.

If an ammonia adsorbent is used as the assistant reducing agent the method of adsorption of ammonia by the adsorbent is not limited. Generally, an adsorbent such as activated carbon is put in a container in which aqueous ammonia is present, and is aged until adsorption becomes balanced (for usually several hours or several days). The reduction of the ammonia is sufficiently progressed during the reducing reaction, and vivid color tone can easily be obtained according to the function of the assistant reducing agent.

Also, according to the invention, it is possible to use 500 to 1000 °C, and preferably 700 to 950 °C for the reduction temperature. If the reduction temperature is less than 500 °C, the reduction may not sufficiently progress. If the reduction temperature is more than 1000°C the mica itself may be sintered.

Also, it a reoxidizing procedure is to be applied, it is preferable to heat at 200 to 700 °C, and more preferably 300 to 600°C. If the reoxidizing temperature is less than 200 °C, enough titanium oxide layer may not be formed. If the reoxidizing temperature is more than 700°C, most of the reduced titanium oxide may change to titanium dioxide and hardly obtained vivid color.

[EMBODIMENT]

The present invention will be explained in detail with reference to the following examples. The present invention is not limited to these examples. Also, content is shown in weight % as far as there is not specification especially.

[EMBODIMENT 1]

Manufacturing examples of a colored titanium mica pigment using the reducing agent and the assistant reducing agent are explained.

Part of the titanium dioxide layer on the surface of the mica titanium is reduced to lower titanium oxide.

As a manufacturing method, one or more reducing agents selected from silicon, titanium hydride, calcium hydride and carbon and one or more assistant reducing agents such as an inorganic ammonium compound or an organic NH-compound were mixed into commercially-available titanium dioxide coated mica. The mixture was heated and reduced at 500 to 1000 °C, preferably 700 to 950 °C, under reduced pressure condition equal to or less than $133 \times 10^2$ Pa (100 torr), or under an atmosphere of an inert gas such as argon or helium or a reducing gas such as hydrogen or ammonia.

Concrete manufacturing examples will be explained in detail.

Five types of commercially-available titanium dioxide-coated mica (MERK company) having iridescence and various interference colors were used as raw materials. 50 g of the titanium dioxide-coated mica was mixed with the reducing agent and the assistant reducing agent in each of the following examples. The content of each ingredient, reduction temperature and reduction time were changed for each example, resulting in different colored titanium mica pigment.

MANUFACTURING EXAMPLE 1-1

1 g of silicon as the reducing agent and 5 g of urea as the assistant reducing agent were added to titanium dioxide-coated mica having a green interference color. The mixture was stirred and mixed by a mixer. The mixture was filled into a container. The container was put in an electric furnace, the pressure therein was decompressed by a vacuum pump to below 133 Pa (1 torr), and heated and reduced at 850 °C for 20 hours.

MANUFACTURING EXAMPLE 1-2

2 g of titanium hydride as the reducing agent and 10 g of ammonium bicarbonate as the assistant reducing agent were added to titanium dioxide-coated mica having red interference color. The mixture was stirred and mixed by a mixer. The mixture was filled into a container. The container was put in an electric furnace, the pressure thereof was decompressed by vacuum pump to below 133 Pa (1 torr), and heated and reduced at 900 °C for 12 hours.

MANUFACTURING EXAMPLE 1-3

5 g of calcium hydride as the reducing agent and 5 g of ammonium carbonate as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 950 °C for 7 hours.

MANUFACTURING EXAMPLE 1-4

10 g of carbon as the reducing agent and 5 g of ammonium chloride as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 700°C for 30 hours.

MANUFACTURING EXAMPLE 1-5

0.5 g of silicon as the reducing agent and 10 g of ammonium carbonate as the assistant reducing agent were added to titanium dioxide-coated mica having blue interference color. The mixture was stirred and mixed by a mixer. The mixture was filled into a container. The container was put in an electric furnace under 150 ml/min flow of ammonia gas and heated and reduced at 900°C for 7 hours.

MANUFACTURING EXAMPLE 1-6

1.5 g of silicon as the reducing agent and 5 g of ammonium chloride as the assistant reducing agent were added to titanium dioxide-coated mica having yellow interference color. The mixture was stirred and mixed by a mixer. The mixture was filled into a container. The container was put in an electric furnace, the pressure thereof was decompressed by vacuum pump to below 133 Pa (1 torr), and heated and reduced at 950°C for 10 hours.

MANUFACTURING EXAMPLE 1-7

2 g of calcium hydride as the reducing agent and 10 g of ammonium carbonate as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 1-8

2.5 g of carbon as the reducing agent and 5 g of ammonium bicarbonate as the assistant reducing agent were added to titanium dioxide-coated mica having green interference color. The mixture was stirred and mixed by a mixer.

The mixture was filled into a container. The container was put in an electric furnace, the pressure thereof was decompressed by vacuum pump to below 133 Pa (1 torr), and heated and reduced at 900 °C for 12 hours.

MANUFACTURING EXAMPLE 1-9

0.5 g of each silicon and carbon as the reducing agent and 5 g of urea as the assistant reducing agent were added to titanium dioxide-coated mica having silver interference color. The mixture was stirred and mixed by a mixer. The mixture was filled into a container. The container was put in an electric furnace under 300 ml/min flow of helium gas, and heated and reduced at 900 °C for 30 hours.

MANUFACTURING EXAMPLE 1-10

0.5 g of each silicon and titanium hydride as the reducing agent and 5 g of urea as the assistant reducing agent were added to titanium dioxide-coated mica having blue interference color. The mixture was stirred and mixed by a mixer. The mixture was filled into a container. The container was put in an electric furnace, the pressure thereof was decompressed by vacuum pump to below 133 Pa (1 torr), and heated and reduced at 850 °C for 12 hours.

MANUFACTURING EXAMPLE 1-11

0.5 g of each silicon and titanium hydride as the reducing agent and 5 g of urea as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900 °C for 12 hours.

MANUFACTURING EXAMPLE 1-12

0.5 g of each silicon and titanium hydride as the reducing agent and 5 g of each urea and ammonium bicarbonate as the assistant reducing agent were added to titanium dioxide-coated mica having red interference color. The mixture was stirred and mixed by a mixer. The mixture was filled into a container. The container was put in an electric furnace, the pressure thereof was decompressed by vacuum pump to below 133 Pa (1 torr), and heated and reduced at 900 °C for 12 hours.

MANUFACTURING EXAMPLE 1-13

0.5 g of each of silicon, calcium hydride and carbon as the reducing agent and 5 g of each urea and ammonium chloride as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 1-14

0.5 g of each of silicon, calcium hydride, carbon and titanium hydride as reducing agents and 5 g of urea as the assistant reducing agent were added to titanium dioxide-coated mica having yellow interference color. The mixture was stirred and mixed by a mixer. The mixture was filled into a container. The container was put in an electric furnace under 300 ml/min flow of argon gas, and heated and reduced at 900°C for 12 hours.

MANUFACTURING EXAMPLE 1-15

1.5 g of silicon as the reducing agent and 5 g of urea and 2.5 g of each of ammonium carbonate and ammonium chloride as assistant reducing agents were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 1-16

5.0 g of carbon as the reducing agent and 5.0 g of oxamide as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 10 hours.

MANUFACTURING EXAMPLE 1-17

3.5 g of silicon as the reducing agent and 1.5 g of p-phenylenediamine as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 10 hours.

MANUFACTURING EXAMPLE 1-18

3.5 g of titanium hydride as the reducing agent and 1.0 g of 4,4-diaminoazobenzene as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 10 hours.

MANUFACTURING EXAMPLE 1-19

4.0 g of calcium hydride as the reducing agent and 5.0 g of monoethanolamine as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 10 hours.

MANUFACTURING EXAMPLE 1-20

2.5 g of titanium hydride as the reducing agent and 2.5 g of pyridine as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 10 hours.

1.0 g of each powder obtained by manufacturing examples 1 to 20 was dispersed in 15 g of nitronclear (MUSASHINO PAINT COMPANY) and applied to a black hiding-chart by an 0.1mm-applicator, and the color thereof was measured using Colorimetry Measuring Apparatus-1000R (MINOLTA COMPANY).

The measured colorimetry values are shown in table 1.

Table- 1

|  | L | a | b |
|---|---|---|---|
| MANUFACTURING EXAMPLE 1-1 | 23.5 | -6.1 | -10.3 |
| MANUFACTURING EXAMPLE 1-2 | 16.8 | -0.4 | 0.5 |
| MANUFACTURING EXAMPLE 1-3 | 34.1 | -12.2 | -5.5 |
| MANUFACTURING EXAMPLE 1-4 | 38.4 | -12.7 | -4.3 |
| MANUFACTURING EXAMPLE 1-5 | 18.2 | +10.3 | -14.3 |
| MANUFACTURING EXAMPLE 1-6 | 32.2 | -4.4 | 3.7 |
| MANUFACTURING EXAMPLE 1-7 | 41.7 | -11.4 | -1.8 |
| MANUFACTURING EXAMPLE 1-8 | 40.9 | -9.9 | -3.0 |
| MANUFACTURING EXAMPLE 1-9 | 53.2 | -1.6 | -7.8 |
| MANUFACTURING EXAMPLE 1-10 | 15.3 | 2.5 | 0.6 |
| MANUFACTURING EXAMPLE 1-11 | 14.4 | 2.9 | -11.2 |
| MANUFACTURING EXAMPLE 1-12 | 18.4 | -1.4 | 4.5 |
| MANUFACTURING EXAMPLE 1-13 | 13.9 | 4.8 | -16.1 |
| MANUFACTURING EXAMPLE 1-14 | 17.6 | -1.9 | -2.4 |
| MANUFACTURING EXAMPLE 1-15 | 13.8 | 3.2 | -9.0 |
| MANUFACTURING EXAMPLE 1-16 | 11.66 | 3.77 | -5.40 |
| MANUFACTURING EXAMPLE 1-17 | 12.89 | 3.69 | -4.67 |

Table- 1   (continued)

|  | L | a | b |
|---|---|---|---|
| MANUFACTURING EXAMPLE 1-18 | 12.62 | 3.49 | -5.48 |
| MANUFACTURING EXAMPLE 1-19 | 13.40 | 4.47 | -9.82 |
| MANUFACTURING EXAMPLE 1-20 | 17.94 | -0.62 | -10.13 |

As is clear from the table 1, the colored titanium mica pigment according to the EMBODIMENT 1 presented vivid color tone. Also, there was not observed cohesion by fusing the reducing agent and the other powder, and uniform quality was obtained.

[EMBODIMENT 2]

After producing a reduced titanium oxide layer on the surface of mica, the surface of the reduced titanium oxide layer is reoxidized and colored titanium mica pigments having excellent stability are obtained.

The manufacturing method thereof will be explained hereinafter.

The colored titanium mica according to the EMBODIMENT 2 has the structure as described below. Namely, the reduced titanium oxide layer is formed on the surface of the mica by same method as the EMBODIMENT 1. And the titanium dioxide layer is formed on the surface of the reduced titanium oxide layer.

Incidentally, according to the reduction conditions, the structure of pigment may become such as (mica)-(titanium dioxide layer)-reduced titanium oxide layer)-(titanium dioxide layer).

The colored titanium mica pigment mentioned in the EMBODIMENT 1 has very high stability, compared to prior art pigments. However, since the surface layer is made of reduced titanium oxide, the reduced titanium oxide layer can be oxidized again and sometimes causes color deviation under high temperature conditions.

Accordingly, in the EMBODIMENT 2, the titanium mica pigment according to the EMBODIMENT 1 is reoxidized under oxidizing atmosphere and surface of the reduced titanium oxide layer is changed to titanium dioxide layer in order to improve the oxidation stability.

As a manufacturing method, the obtained reduced titanium oxide-coated mica according to the EMBODIMENT 1 is heated and reoxidized at 200 to 700 °C, and preferably at 300 to 600°C, under an oxidizing atmosphere, and forms a titanium dioxide layer on the surface of the reduced titanium oxide layer.

Incidentally, if the reoxidation temperature is less than 200°C, the titanium dioxide layer which is formed on the surface of the reduced titanium oxide layer may not be enough. If the reoxidation temperature is more than 700°C, all of the reduced titanium oxide may change to titanium dioxide and the desired vivid color tone may not be obtained.

Concrete manufacturing examples will be explained in detail.

MANUFACTURING EXAMPLE 2-1

5 g of silicon as the reducing agent was added to titanium dioxide-coated mica having green interference color. The mixture was stirred and mixed by the mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500°C for 0.5 hour in an ordinary atmosphere.

MANUFACTURING EXAMPLE 2-2

2 g of titanium hydride as the reducing agent was added to titanium dioxide-coated mica having blue interference color. The mixture was stirred and mixed by the mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 400 °C for 2 hours in an ordinary atmosphere.

MANUFACTURING EXAMPLE 2-3

10 g of calcium hydride as the reducing agent was added to titanium dioxide-coated mica having green interference color. The mixture was stirred and mixed by the mixer. The mixture was filled into a container. The container was put in an electric furnace, the pressure thereof was decompressed by vacuum pump to below 133 Pa (1 torr), and heated and reduced at 950°C for 7 hours. The obtained reduced titanium oxide-coated mica was heated and oxidized at 400°C for 3 hours in an ordinary atmosphere.

MANUFACTURING EXAMPLE 2-4

5 g of carbon as the reducing agent was added to titanium dioxide-coated mica having yellow interference color. The mixture was stirred and mixed by the mixer. The mixture was filled into a container. The container was put in an electric furnace, the pressure thereof was decompressed by vacuum pump to below 133 Pa (1 torr), and heated and reduced at 700°C for 30 hours. The obtained reduced titanium oxide-coated mica was heated and oxidized at 500°C for 0.5 hour in an ordinary atmosphere.

MANUFACTURING EXAMPLE 2-5

5 g of silicon as the reducing agent was added to titanium dioxide-coated mica having red interference color. The mixture was stirred and mixed by the mixer. The mixture was filled into a container. The container was put in an electric furnace under 300 ml/min flow of argon gas, and heated and reduced at 900°C for 12 hours. The obtained reduced titanium oxide-coated mica was heated and oxidized at 600°C for 0.5 hour in an ordinary atmosphere.

MANUFACTURING EXAMPLE 2-6

7.5 g of titanium hydride as the reducing agent was added to titanium dioxide-coated mica having silver interference color. The mixture was stirred and mixed by the mixer. The mixture was filled into a container. The container was put in an electric furnace, the pressure thereof was decompressed by vacuum pump to below 133 Pa (1 torr), and heated and reduced at 950°C for 12 hours. The obtained reduced titanium oxide-coated mica was heated and oxidized at 450°C for 3 hours in an ordinary atmosphere.

MANUFACTURING EXAMPLE 2-7

0.5 g of each silicon and carbon as the reducing agent were added to titanium dioxide-coated mica having red interference color. The mixture was stirred and mixed by the mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500°C for 1.5 hour in an ordinary atmosphere.

MANUFACTURING EXAMPLE 2-8

5 g of each of silicon and titanium hydride as the reducing agent were added to titanium dioxide-coated mica having green interference color. The mixture was stirred and mixed by a mixer. The mixture was filled into a container. The container was put in an electric furnace under 300 ml/min flow of helium gas, and heated and reduced at 900°C for 12 hours. The obtained reduced titanium oxide-coated mica was heated and oxidized at 700°C for 1 hour in an ordinary atmosphere.

MANUFACTURING EXAMPLE 2-9

5 g of each of silicon and calcium hydride as the reducing agent were added to titanium dioxide-coated mica having silver interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500°C for 1 hour in an ordinary atmosphere.

MANUFACTURING EXAMPLE 2-10

1 g of each of silicon, titanium hydride and carbon as the reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 300°C for 2 hour in an ordinary atmosphere.

MANUFACTURING EXAMPLE 2-11

2.5 g of silicon and 1 g of each of calcium hydride, titanium hydride and carbon as reducing agents were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500°C for 4 hours in an ordinary atmosphere.

COMPARISON 1

2.5 g of metal titanium as the reducing agent was added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

The colors of manufacturing examples 2-1 to 2-11 and comparison 1 were measured by the method as described in EMBODIMENT 1.

Furthermore, as for example 1 and comparison 1, color deviations were measured after heating 400°C for 1 hour. Color difference $\Delta E$ was calculated with the following formula.

$$\Delta E=\{(L_1-L_2)^2+(a_1-a_2)^2+(b_1-b_2)^2\}^{1/2}$$

The measured colorimetry values are shown in table 2.

Table 2

| | BEFORE HEATING | | | AFTER HEATING | | | $\Delta E$ |
|---|---|---|---|---|---|---|---|
| | $L_1$ | $a_1$ | $b_1$ | $L_2$ | $a_2$ | $b_2$ | |
| EXAMPLE 2-1 | 15.0 | 3.5 | -13.2 | 15.1 | 2.9 | -13.9 | 1.0 |
| EXAMPLE 2-2 | 23.6 | 10.9 | -26.7 | | | | |
| EXAMPLE 2-3 | 28.0 | -9.5 | -7.6 | | | | |
| EXAMPLE 2-4 | 32.6 | -3.2 | 5.3 | | | | |
| EXAMPLE 2-5 | 30.8 | 2.1 | -6.6 | | | | |
| EXAMPLE 2-6 | 24.9 | -1.5 | -6.6 | | | | |
| EXAMPLE 2-7 | 26.8 | -1.4 | 4.2 | | | | |
| EXAMPLE 2-8 | 37.6 | -7.6 | -4.5 | | | | |
| EXAMPLE 2-9 | 44.1 | -1.3 | -7.2 | | | | |
| EXAMPLE 2-10 | 23.8 | -6.6 | -10.9 | | | | |
| EXAMPLE 2-11 | 32.8 | -9.2 | -5.3 | | | | |
| COMPARISON 1 | 13.3 | 2.8 | -14.4 | 23.9 | -7.1 | -10.1 | 15.2 |

As is clear from the table 2 the colored titanium mica pigment according to the EMBODIMENT 2 presented vivid color tone.

Also, as for the colored titanium mica pigment according to the EMBODIMENT 2, change of color tone before and after heating is very small while change of color tone before and after heating is notable with respect to the comparison 1. As a result, it is understood that the heat resisting property of the EMBODIMENT 2 is excellent.

[EXAMPLE 3]

The pigment having the structure as described in the EMBODIMENT 2 was prepared by using a reducing agent and an assistant reducing agent.

MANUFACTURING EXAMPLE 3-1

5 g of silicon as the reducing agent and 5 g of urea as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500 °C for 1 hour in an ordinary atmosphere

MANUFACTURING EXAMPLE 3-2

10 g of carbon as the reducing agent and 10 g of ammonium carbonate as the assistant reducing agent were added to titanium dioxide-coated mica having yellow interference color. The mixture was stirred and mixed by a mixer. The mixture was filled into a container. The container was put in an electric furnace, the pressure therein was decompressed by vacuum pump to below 133 Pa (1 torr), and heated and reduced at 700°C for 30 hours. The obtained reduced titanium oxide-coated mica was heated and oxidized at 500°C for 0.5 hour in an ordinary atmosphere.

MANUFACTURING EXAMPLE 3-3

1 g of silicon as the reducing agent and 10 g of urea as the assistant reducing agent were added to titanium dioxide-coated mica having red interference color. The mixture was stirred and mixed by a mixer. The mixture was filled into a container. The container was put in an electric furnace under 300 ml/min flow of helium gas and heated and reduced at 900°C for 12 hours. The obtained reduced titanium oxide coated mica was heated and oxidized at 550°C for 1 hour in an ordinary atmosphere.

MANUFACTURING EXAMPLE 3-4

7.5 g of titanium hydride as the reducing agent and 5 g of ammonium chloride as the assistant reducing agent were added to titanium dioxide-coated mica having silver interference color. The mixture was stirred and mixed by a mixer. The mixture was filled into a container. The container was put in an electric furnace, the pressure thereof was decompressed by vacuum pump to below 133 Pa (1 torr), and heated and reduced at 950°C for 10 hours. The obtained reduced titanium oxide-coated mica was heated and oxidized at 450 °C for 3 hours in an ordinary atmosphere.

MANUFACTURING EXAMPLE 3-5

5 g of each of silicon and carbon as the reducing agent and 5 g of urea as the assistant reducing agent were added to titanium dioxide-coated mica having green interference color. The mixture was stirred and mixed a the mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide coated mica was heated and oxidized at 600 °C for 0.5 hour in an ordinary atmosphere.

MANUFACTURING EXAMPLE 3-6

0.5 g of each of silicon and titanium hydride as the reducing agent and 5 g of urea as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500 °C for 2 hours in an ordinary atmosphere.

MANUFACTURING EXAMPLE 3-7

1.5 g of each of silicon and calcium hydride as the reducing agent and 5 g of urea as the assistant reducing agent were added to titanium dioxide-coated mica having blue interference color. The mixture was stirred and mixed by a mixer. The mixture was filled into a container. The container was put in an electric furnace, the pressure therein was decompressed by vacuum pump to below 133 Pa (1 torr), and heated and reduced at 900°C for 12 hours. The obtained reduced titanium oxide-coated mica was heated and oxidized at 500 °C for 1 hour in an ordinary atmosphere.

MANUFACTURING EXAMPLE 3-8

5 g of each of silicon and calcium hydride as the reducing agent and 5 g of ammonium carbonate as the assistant reducing agent were added to titanium dioxide-coated mica having yellow interference color. The mixture was stirred and mixed by a mixer. The mixture was filled into a container. The container was put in an electric furnace, the pressure therein was decompressed by vacuum pump to below (133 Pa) 1 torr, and heated and reduced at 900°C for 12 hours.

The obtained reduced titanium oxide-coated mica was heated and oxidized at 500 °C for 1 hour in an ordinary atmosphere.

MANUFACTURING EXAMPLE 3-9

1 g of each of silicon, calcium hydride and carbon as the reducing agent and 2.5 g of urea and ammonium carbonate as the assistant reducing agent were added to titanium dioxide-coated mica having green interference color. The mixture was stirred and mixed by a mixer. The mixture was filled into a container. The container was put in an electric furnace, the pressure therein was decompressed by vacuum pump to below 133 Pa (1 torr), and heated and reduced at 900°C for 12 hours. The obtained reduced titanium oxide-coated mica was heated and oxidized at 300 °C for 2 hours in an ordinary atmosphere.

MANUFACTURING EXAMPLE 3-10

2.5 g of silicon as the reducing agent and 2.5 g of urea and ammonium bicarbonate as the assistant reducing agent were added to titanium dioxide-coated mica having green interference color. The mixture was stirred and mixed by a mixer. The mixture was filled into a container. The container was put in an electric furnace under 300 ml/min flow of ammonium gas, and heated and reduced at 900°C for 12 hours. The obtained reduced titanium oxide-coated mica was heated and oxidized at 500 °C for 4 hours in an ordinary atmosphere.

The measured colorimetry values are shown in table 3.

Table 3

| | BEFORE HEATING | | | AFTER HEATING | | | $\Delta E$ |
|---|---|---|---|---|---|---|---|
| | $L_1$ | $a_1$ | $b_1$ | $L_2$ | $a_2$ | $b_2$ | |
| EXAMPLE 3-1 | 14.7 | 3.0 | -12.0 | 15.1 | 2.9 | -12.5 | 0.7 |
| EXAMPLE 3-2 | 37.6 | -3.1 | 8.0 | | | | |
| EXAMPLE 3-3 | 30.9 | -0.1 | 6.3 | | | | |
| EXAMPLE 3-4 | 32.9 | -1.5 | -10.5 | | | | |
| EXAMPLE 3-5 | 40.6 | -9.9 | -3.1 | | | | |
| EXAMPLE 3-6 | 33.1 | -10.4 | -6.5 | | | | |
| EXAMPLE 3-7 | 21.2 | 10.4 | -28.3 | | | | |
| EXAMPLE 3-8 | 27.1 | -3.7 | 2.5 | | | | |
| EXAMPLE 3-9 | 28.8 | -9.6 | -7.9 | | | | |
| EXAMPLE 3-10 | 16.8 | 1.2 | -12.3 | | | | |
| COMPARISON 1 | 13.3 | 2.8 | -14.4 | 23.9 | -7.1 | -10.1 | 15.2 |

As is clear from the table 3, the colored titanium mica pigment according to the EMBODIMENT 3 presented vivid color tone.

Also, for the colored titanium mica pigment according to the EMBODIMENT 3, change of color tone before and after heating is very small while change of color tone before and after heating is notable with respect to the comparison 1. As a result, it is understood that the heat resisting property of the EMBODIMENT 3 is also excellent.

The following EMBODIMENTS 4 to 6 disclose methods using an ammonia adsorbent as the assistant reducing agent.

[EMBODIMENT 4]

A manufacturing method of the example 4 is basically as same as the EMBODIMENT 1.

Carriers for the ammonia adsorbent are commercially available powder activated carbon (NIMURA KAGAKU KOGYO), fine particle silicon dioxide and dimethyldialkylammonium hectlite. The carriers are put in a desiccator in which 28 %-aqueous ammonia exist for 3 days.

MANUFACTURING EXAMPLE 4-1

2.5 g of silicon as the reducing agent and 5 g of ammonia adsorbed activated carbon as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 4-2

2 g of titanium hydride as the reducing agent and 5 g of ammonia adsorbed activated carbon as the assistant reducing agent were added to titanium dioxide-coated mica having red interference color. The mixture was stirred and mixed by a mixer. The mixture was filled into a container. The container was put in an electric furnace, the pressure thereof was decompressed by vacuum pump to below 133 Pa (1 torr), and heated and reduced at the 900°C for 12 hours.

MANUFACTURING EXAMPLE 4-3

5 g of calcium hydride as the reducing agent and 5 g of the ammonia adsorbed activated carbon as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 4-4

5 g of carbon as the reducing agent and 5 g of ammonia adsorbed activated carbon as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 950°C for 10 hours.

MANUFACTURING EXAMPLE 4-5

5 g of each silicon and carbon as the reducing agent and 5 g of ammonia adsorbed activated carbon as the assistant reducing agent were added to titanium dioxide-coated mica having blue interference color. The mixture was stirred and mixed by a mixer. The mixture was filled into a container. The container was put in an electric furnace under 300 ml/min flow of argon gas, and heated and reduced at 850°C for 20 hours.

MANUFACTURING EXAMPLE 4-6

3 g of silicon and 5 g of each of titanium hydride and carbon as the reducing agent and 5 g of ammonia adsorbed activated carbon as the assistant reducing agent were added to titanium dioxide-coated mica having yellow interference color. The mixture was stirred and mixed by a mixer. The mixture was filled into a container. The container was put in an electric furnace, the pressure thereof was decompressed by vacuum pump to below 133 Pa (1 torr), and heated and reduced at 700°C for 30 hours.

MANUFACTURING EXAMPLE 4-7

10 g of silicon, 3 g of calcium hydride, 5 g of titanium hydride and 5 g of carbon as the reducing agent and 5 g of ammonia adsorbed activated carbon as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and deoxidized at 800°C for 30 hours.

MANUFACTURING EXAMPLE 4-8

2 g of each of titanium hydride and calcium hydride as the reducing agent and 5 g of the ammonia adsorbed activated carbon as the assistant reducing agent were added to titanium dioxide-coated mica having silver interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 4-9

1 g of each of titanium hydride, calcium hydride and carbon as the reducing agent and 5 g of the ammonia adsorbed activated carbon as the assistant reducing agent were added to titanium dioxide-coated mica having red interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 4-10

1 g of each of titanium hydride, silicon and carbon as the reducing agent and 5 g of ammonia adsorbed activated carbon as the assistant reducing agent were added to titanium dioxide-coated mica having blue interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 4-11

1 g of each of titanium hydride, silicon and calcium hydride as the reducing agent and 5 g of ammonia adsorbed activated carbon as the assistant reducing agent were added to titanium dioxide-coated mica having yellow interference color. The mixture was stirred and mixed by a mixer. The mixture was filled into a container. The container was put in an electric furnace, the pressure thereof was decompressed by vacuum pump to below 133 Pa (1 torr), and heated and reduced at 950°C for 12 hours.

MANUFACTURING EXAMPLE 4-12

1 g of each of silicon, titanium hydride, calcium hydride and carbon as the reducing agent and 5 g of ammonia adsorbed activated carbon as the assistant reducing agent were added to titanium dioxide-coated mica having silver interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 4-13

5 g of calcium hydride as the reducing agent and 5 g of ammonia adsorbed activated carbon as the assistant reducing agent were added to titanium dioxide-coated mica having green interference color. The mixture was stirred and mixed by a mixer. The mixture was filled into a container. The container was put in an electric furnace under 150 ml/min flow of ammonia gas, and heated and reduced at 900°C for 5 hours.

MANUFACTURING EXAMPLE 4-14

2.0 g of each of silicon and carbon as the reducing agent and 5 g of ammonia adsorbed activated carbon as the assistant reducing agent were added to titanium dioxide-coated mica having blue interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

MANUFACTURING EXAMPLE 4-15

2.0 g of each of calcium hydride, titanium hydride and carbon as the reducing agent and 5 g of ammonia adsorbed super fine silicon dioxide having 50 $m^2$/g specific surface area as the assistant reducing agent were added to titanium dioxide-coated mica having red interference color. The mixture was stirred and mixed by a mixer. The mixture was filled info a container. The container was put in an electric furnace, the pressure thereof was decompressed by vacuum pump to below 133 Pa (1 torr), and heated and reduced at 900°C for 12 hours.

MANUFACTURING EXAMPLE 4-16

2.0 g of titanium hydride as the reducing agent and 5 g of ammonia adsorbed dimethylalkylammonium hectlite as the assistant reducing agent were added to titanium dioxide-coated mica having red interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours.

Each powder obtained from manufacturing examples 4-1 to 4-16 were examined by the same method as described in EMBODIMENT 1.

The measured colorimetry values are shown in table 4.

Table 4

|  | L | a | b |
|---|---|---|---|
| MANUFACTURING EXAMPLE 1 | 13.9 | 4.2 | -7.1 |
| MANUFACTURING EXAMPLE 2 | 18.4 | -0.9 | 1.4 |
| MANUFACTURING EXAMPLE 3 | 12.5 | 4.7 | -5.7 |
| MANUFACTURING EXAMPLE 4 | 18.6 | -5.5 | -12.8 |
| MANUFACTURING EXAMPLE 5 | 15.8 | -0.5 | 2.1 |
| MANUFACTURING EXAMPLE 6 | 18.7 | -0.7 | -1.3 |
| MANUFACTURING EXAMPLE 7 | 16.6 | 3.9 | 4.1 |
| MANUFACTURING EXAMPLE 8 | 48.4 | -1.6 | -10.4 |
| MANUFACTURING EXAMPLE 9 | 18.2 | -1.3 | 1.6 |
| MANUFACTURING EXAMPLE 10 | 14.2 | 2.3 | -0.2 |
| MANUFACTURING EXAMPLE 11 | 17.6 | 0.2 | -2.4 |
| MANUFACTURING EXAMPLE 12 | 20.4 | 1.8 | -7.3 |
| MANUFACTURING EXAMPLE 13 | 12.5 | 4.7 | -5.7 |
| MANUFACTURING EXAMPLE 14 | 15.86 | -0.57 | 2.11 |
| MANUFACTURING EXAMPLE 15 | 18.29 | -1.32 | 1.58 |
| MANUFACTURING EXAMPLE 16 | 20.41 | 0.92 | -1.44 |

As is clear from the table 4, the colored titanium mica pigment according to the EMBODIMENT 4 presented vivid color tone. Also, there no cohesion by fusing the reducing agent and the other powder was observed, and uniform quality were obtained.

[EMBODIMENT 5]

This EMBODIMENT 5 discloses a pigment having same structure as disclosed in the EMBODIMENT 2, but an ammonia adsorbent is used as the assistant reducing agent in the example 5.

MANUFACTURING EXAMPLE 5-1

2.5 g of silicon as the reducing agent and 5 g of the ammonia adsorbed activated carbon as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 400 °C for 2 hours in an ordinary atmosphere.

MANUFACTURING EXAMPLE 5-2

2 g of calcium hydride as the reducing agent and 5 g of ammonia adsorbed activated carbon as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500 °C for 1 hour in an ordinary atmosphere.

The measured colorimetry value is shown in table 5.

Table 5

|  | BEFORE HEATING | | | AFTER HEATING | | | ΔE |
|---|---|---|---|---|---|---|---|
|  | $L_1$ | $a_1$ | $b_1$ | $L_2$ | $a_2$ | $b_2$ |  |
| EXAMPLE 5-1 | 18.2 | -0.6 | -12.7 | 18.9 | -0.1 | -12.1 | 1.0 |
| EXAMPLE 5-2 | 28.8 | -9.5 | -7.9 |  |  |  |  |
| EXAMPLE 5-3 | 43.8 | -11.6 | -1.6 |  |  |  |  |
| COMPARISON 1 | 13.3 | 2.8 | -14.4 | 23.9 | -7.1 | -10.1 | 15.2 |

As is clear from the table 5, the colored titanium mica pigment according to the EMBODIMENT 5 presented vivid color tone.

Also, as for the colored titanium mica pigment according to the EMBODIMENT 5, change of color tone before and after heating is very small while change of color tone before and after heating is notable with respect to the comparison 1. As a result, it is understood that the heat resisting property of the EMBODIMENT 5 is excellent.

[EMBODIMENT 6]

This EMBODIMENT 6 discloses the pigment having same structure as disclosed in the example 3, but the ammonia adsorbent is used as the assistant reducing agent in the EMBODIMENT 5.

MANUFACTURING EXAMPLE 6-1

2.5 g of carbon as the reducing agent and 5 g of each of ammonia adsorbed activated carbon and ammonium bicarbonate as the assistant reducing agent were added to titanium dioxide-coated mica having green interference color. The mixture was stirred and mixed by a mixer. The mixture was filled into a container. The container was put in an electric furnace, the pressure thereof was decompressed by vacuum pump to below 133 Pa (1 torr), and heated and reduced at 900°C for 12 hours. The obtained reduced titanium oxide-coated mica was heated and oxidized at 500 °C for 1 hour in an ordinary atmosphere.

The measured colorimetry value is shown in table 6.

Table 6

|  | L | a | b |
|---|---|---|---|
| MANUFACTURING EXAMPLE 6-1 | 23.1 | -2.4 | -14.3 |

As is clear from the table 6, the colored titanium mica pigment according to the EMBODIMENT 6 presented vivid color tone.

As described above, according to the manufacturing method of the present invention, it is possible to manufacture pigment including reduced titanium oxide efficiently without aggregation of reducing agent and powder.

**Claims**

1. A method for preparing a pigment, comprising heating a mica pigment coated with titanium dioxide with a reducing agent selected from silicon, titanium hydride, calcium hydride and carbon, in a low oxygen atmosphere.

2. A method according to claim 1, which comprises heating titanium dioxide-coated mica with the reducing agent at 500 to 1000°C.

3. A method according to claim 1, which further comprises oxidising the surface of the obtained reduced titanium oxide layer, to obtain a layer including titanium dioxide as a main ingredient on the surface of the reduced titanium oxide layer.

4. A method according to claim 3, which comprises heating titanium dioxide-coated mica with the reducing agent at 500 to 1000°C in the low oxygen atmosphere, and then at 300 to 700°C in an oxidising atmosphere.

5. A method according to any preceding claim, wherein the reducing agent is mixed with an assistant reducing agent selected from ammonium and NH-containing compounds.

6. A method according to claim 5, wherein the ammonium compound is selected from urea, ammonium chloride, ammonium bicarbonate and ammonium carbonate.

7. A method according to claim 5, wherein the NH-compound is selected from amines, imines, amides, imides and hydroxylamines.

8. A method according to any of claims 1 to 4, wherein the reducing agent is mixed with an ammonia adsorbent.

9. A method according to claim 8, wherein the ammonia adsorbent is a porous material, e.g. activated carbon, silica gel or clay mineral.

10. A method according to any preceding claim, which comprises heating titanium dioxide-coated mica with the reducing agent at 700 to 950°C.

11. A method according to any preceding claim, which comprises heating titanium dioxide-coated mica with the reducing agent for a period of at least 5 hours.

12. A method according to any preceding claim, which comprises heating titanium dioxide-coated mica with the reducing agent at reduced pressure.

13. A method according to any preceding claim, which comprises heating titanium dioxide-coated mica with the reducing agent in the presence of an inert gas.

14. A method according to claim 1, which comprises heating the titanium dioxide-coated mica with the reducing agent at a temperature of 700 to 950°C for at least 5 hours under reduced pressure.

15. A method according to claim 1, which comprises heating the titanium dioxide-coated mica with the reducing agent at a temperature of 700 to 950°C for at least 5 hours in the presence of an inert gas.

**Patentansprüche**

1. Verfahren zur Herstellung eines Pigments, umfassend das Erwärmen eines mit Titandioxid beschichteten Glimmer-Pigments mit einem aus Silicium, Titanhydrid, Calciumhydrid und Kohlenstoff ausgewählten Reduktionsmittel in einer Atmosphäre mit niedrigem Sauerstoffgehalt.

2. Verfahren nach Anspruch 1, welches das Erwärmen von mit Titandioxid beschichtetem Glimmer mit dem Reduktionsmittel bei 500 bis 1000°C umfaßt.

3. Verfahren nach Anspruch 1, welches weiter die Oxidation der Oberfläche der erhaltenen reduzierten Titanoxid-Schicht umfaßt, um eine Schicht zu erhalten, die Titandioxid als Hauptkomponente auf der Oberfläche der reduzierten Titanoxid-Schicht enthält.

4. Verfahren nach Anspruch 3, welches das Erwärmen von mit Titandioxid beschichtetem Glimmer mit dem Reduktionsmittel bei 500 bis 1000°C in der Atmosphäre mit niedrigem Sauerstoffgehalt und anschließend bei 300 bis 700°C in einer oxidierenden Atmosphäre umfaßt.

5. Verfahren nach irgendeinem vorhergehenden Anspruch, worin das Reduktionsmittel mit einem aus Ammonium und NH enthaltenden Verbindungen ausgewählten Hilfs-Reduktionsmittel gemischt ist.

6. Verfahren nach Anspruch 5, worin die Ammonium-Verbindung aus Harnstoff, Ammoniumchlorid, Ammoniumbicarbonat und Ammoniumcarbonat ausgewählt ist.

7. Verfahren nach Anspruch 5, worin die NH-Verbindung aus Aminen, Iminen, Amiden, Imiden und Hycroxylaminen ausgewählt ist.

EP 0 601 761 B1

**8.** Verfahren nach irgendeinem der Ansprüche 1 bis 4, worin das Reduktionsmittel mit einem Ammoniak-Adsorbens gemischt ist.

**9.** Verfahren nach Anspruch 8, worin das Ammoniak-Adsorbens ein poröses Material, z.B. Aktivkohle, Kieselgel oder Tonmineral, ist.

**10.** Verfahren nach irgendeinem vorhergehenden Anspruch, welches das Erwärmen von mit Titandioxid beschichtetem Glimmer mit dem Reduktionsmittel bei 700 bis 950°C umfaßt.

**11.** Verfahren nach irgendeinem vorhergehenden Anspruch, welches das Erwärmen von mit Titandioxid beschichtetem Glimmer mit dem Reduktionsmittel über einen Zeitraum von mindestens 5 Stunden umfaßt.

**12.** Verfahren nach irgendeinem vorhergehenden Anspruch, welches das Erwärmen von mit Titandioxid beschichtetem Glimmer mit dem Reduktionsmittel bei vermindertem Druck umfaßt.

**13.** Verfahren nach irgendeinem vorhergehenden Anspruch, welches das Erwärmen von mit Titandioxid beschichtetem Glimmer mit dem Reduktionsmittel in Gegenwart eines Inertgases umfaßt.

**14.** Verfahren nach Anspruch 1, welches das Erwärmen des mit Titandioxid beschichteten Glimmers mit dem Reduktionsmittel bei einer Temperatur von 700 bis 950°C über einen Zeitraum von mindestens 5 Stunden unter vermindertem Druck umfaßt.

**15.** Verfahren nach Anspruch 1, welches das Erwärmen des mit Titandioxid beschichteten Glimmers mit dem Reduktionsmittel bei einer Temperatur von 700 bis 950°C über einen Zeitraum von mindestens 5 Stunden in Gegenwart eines Inertgases umfaßt.

**Revendications**

**1.** Procédé de préparation d'un pigment, comprenant le chauffage d'un pigment de mica recouvert avec du dioxyde de titane avec un agent réducteur choisi parmi le silicium, l'hydrure de titane, l'hydrure de calcium et le carbone, dans une atmosphère pauvre en oxygène.

**2.** Procédé selon la revendication 1, qui comprend le chauffage du mica recouvert de dioxyde de titane avec l'agent réducteur à une température comprise entre 500 et 1000°C.

**3.** Procédé selon la revendication 1, qui comprend de plus l'oxydation de la surface de la couche d'oxyde de titane réduit obtenue, pour obtenir une couche contenant comme constituant principal du dioxyde de titane sur la surface de la couche d'oxyde de titane réduit.

**4.** Procédé selon la revendication 3, qui comprend le chauffage du mica recouvert de dioxyde de titane avec l'agent réducteur à une température comprise entre 500 et 1000°C dans une atmosphère pauvre en oxygène, puis à une température comprise entre 300 et 700°C dans une atmosphère oxydante.

**5.** Procédé selon l'une quelconque des revendications précédentes, dans lequel l'agent réducteur est mélangé avec un agent réducteur auxiliaire choisi parmi les composés contenant de l'ammonium et NH.

**6.** Procédé selon la revendication 5, dans lequel le composé d'ammonium est choisi parmi l'urée, le chlorure d'ammonium, le bicarbonate d'ammonium et le carbonate d'ammonium.

**7.** Procédé selon la revendication 5, dans lequel le composé NH est choisi parmi les amines, les imines, les amides, les imides et les hydroxylamines.

**8.** Procédé selon l'une quelconque des revendications 1 à 4, dans lequel l'agent réducteur est mélangé avec un adsorbant de l'ammoniac.

**9.** Procédé selon la revendication 8, dans lequel l'adsorbant de l'ammoniac est un matériau poreux, par exemple du charbon activé, du gel de silice ou de l'argile minérale.

10. Procédé selon l'une quelconque des revendications précédentes, qui comprend le chauffage du mica revêtu de dioxyde de titane avec l'agent réducteur à une température comprise entre 700 et 950°C.

11. Procédé selon l'une quelconque des revendications précédentes, qui comprend le chauffage du mica revêtu de dioxyde de titane avec l'agent réducteur pendant une durée d'au moins 5 heures.

12. Procédé selon l'une quelconque des revendications précédentes, qui comprerd le chauffage du mica revêtu de dioxyde de titane avec l'agent réducteur à pression réduite.

13. Procédé selon l'une quelconque des revendications précédentes, qui comprerd le chauffage du mica revêtu de dioxyde de titane avec l'agent réducteur en présence d'un gaz inerte.

14. Procédé selon la revendication 1, qui comprend le chauffage du mica revêtu de dioxyde de titane avec l'agent réducteur à une température comprise entre 700 et 950°C pendant au moins 5 heures sous pression réduite.

15. Procédé selon la revendication 1, qui comprend le chauffage du mica revêtu de dioxyde de titane avec l'agent réducteur à une température comprise entre 700 et 950°C pendant au moins 5 heures en présence d'un gaz inerte.